(19) Europäisches Patentamt European Patent Office Office européen des brevets

(11) **EP 2 683 076 A1**

(12) **EUROPEAN PATENT APPLICATION**
published in accordance with Art. 153(4) EPC

(43) Date of publication:
**08.01.2014 Bulletin 2014/02**

(51) Int Cl.:
**H02P 9/02** (2006.01)    **G05F 1/66** (2006.01)
**H02M 7/48** (2007.01)    **H02P 23/14** (2006.01)

(21) Application number: **12751859.5**

(22) Date of filing: **27.02.2012**

(86) International application number:
**PCT/ES2012/000048**

(87) International publication number:
**WO 2012/117133 (07.09.2012 Gazette 2012/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011 ES 201100223 P**

(71) Applicant: **Abengoa Solar New Technologies, S.A. 41018 Sevilla (ES)**

(72) Inventors:
• **RODRIGUEZ CORTÉS, Pedro**
  **41014 Sevilla (ES)**

• **CANDELA GARCIA, José Ignacio**
  **41014 Sevilla (ES)**
• **ROCABERT DELGADO, Joan**
  **41014 Sevilla (ES)**
• **TEODORESCU, Remus**
  **41014 Sevilla (ES)**

(74) Representative: **Garcia-Cabrerizo y del Santo, Pedro Maria**
  **Oficina Garcia Cabrerizo, S.L.,**
  **Vitruvio, 23**
  **28006 Madrid (ES)**

(54) **VIRTUAL ADMITTANCE CONTROLLER BASED ON STATIC POWER CONVERTERS**

(57)    The invention relates to a virtual admittance controller based on static power converters, comprising a control loop into the inlet of which is injected the difference in voltage between a virtual internal voltage (e) and the voltage at the network connection point (v). Said difference in voltages feeds a virtual admittance processor (13) that determines the value of a reference current (i*) that it communicates to a current source (14), said current source physically injecting said current into the network (15).

Figure 1

**Description**

**Technical sector of the invention**

The invention belongs to the technical sector of the controllers of the electrical characteristic based on static power converters for renewable energy plants, especially useful in photovoltaic generation plants, which allows offering advanced functionalities to improve the connection of said plants to the electric network.

**Background of the invention**

The sources of renewable energy, mainly wind power plants (WIN) and photovoltaic (PH) power plants, have ceased to be a marginal resource in the generation of electricity. The generators of PH plants use power converters to connect to the electric network. These power converters, also known as inverters, inject current to the voltage of the network to supply power to the same. In normal operating conditions, the PH inverters inject single-phase o tri-phase sinusoidal currents to the network, depending on the power range of the generator. Normally, the currents injected to the network tend to be sinusoidal and are in phase with the voltages of the coupling point to maximize the amount of active power being generated. There are no PH inverters in the market, at least in on a generalized basis, that inject currents to the quadrature with the network voltages, which allows controlling the reactive power injected to the network with the purpose of regulating the voltage level at the coupling point.

When the network voltage is affected by a perturbation, such as imbalances, transients, or harmonics, which is usual in electric networks, conventional PH inverters experience problems to remain appropriately synchronized with the network voltage, which leads to uncontrolled power flows that cause the PH inverter to worsen the situation of the failure of the network. With more serious network perturbations, such as voltage dips, short-circuits, or power oscillations, conventional PH inverters cannot offer an appropriate support to the electric network to help maintain the generation system active. In fact, these serious transient perturbations usually cause the disconnection of the network in the majority of the commercial PH inverters due to the triggering of some of its overcurrent or overvoltage protections.

In order to minimize these inconveniences, virtual synchronous generators are known in the state of the art, which attempt to emulate the behavior of a conventional synchronous generator. The basic input electrical function of a synchronous generator can be described by equation (1), shown below:

$$v = e - i \cdot Z \quad : \quad Z = (R + sL) \qquad (1)$$

Where $Z = (R+sL)$ is the output impedance, $i$ is the current flowing through said impedance, e is the electromotive force induced in the stator, and $v$ is the voltage in its terminals.

This equation can be implemented in a power converter to imitate the electrical function of the synchronous generator. In said case, the impedance $Z = (R+sL)$ is not physically connected to the outlet of the converter, but virtually implemented by means of software. All of the techniques existing in the literature to implement a virtual impedance at the outlet of the network connected to an electrical power generator are based on a direct application of equation (1), that is to say, the voltage generated at the outlet of the power converter $v$ results from subtracting the voltage dip in said impedance $i$(R+sL) from the virtual reference voltage e. Therefore, in all of the techniques found, the power converter acts as a controlled voltage source.

The current injected by the power converter must be measured with the purpose of calculating the voltage dip in the virtual impedance. In some cases, an internal current control loop control is implemented to protect the power converter in the case of current overloads and to guarantee a better follow-up of the reference voltage v*. The implementation of the internal current loop is not directly related to the implementation of the virtual impedance characteristic of the power converter.

All of these conventional techniques applying the concept of virtual impedance according to equation (1) present serious control problems when the measured current i is affected by harmonics or transients. The foregoing is due to the fact that processing a derivative term (sL) to calculate the voltage dip in the output impedance is necessary, which makes the system very sensitive to the perturbations of harmonics, transients, and imbalances. Some techniques reported in the literature use filters to attenuate the highfrequency components in the current measurement; however, this solution inhibits the response of the power converter to support the network with respect to this type of perturbations and can even reduce the margin of stability of the system in particular cases.

Some of the documents showing the implementation of virtual impedance to obtain the output voltage of the converter are found in the following publications:

- Yao, W.; Chen, M.; Matas, J.; Guerrero, J. M.; Qian, Z.-M. "Design and Analysis of the Droop Control Method for Parallel Inverters Considering the Impact of the Complex Impedance on the Power Sharing," Industrial Electronics, IEEE Transactions on, vol.58, no.2, pp.576-588, Feb. 2011.
- Guerrero J. M. et al. in their publication "Output Impedance Design of Parallel-Connected UPS Inverters With Wireless Load-Sharing Control," Industrial Electronics, IEEE Transactions on , vol.52, no.4, pp. 1126- 1135, Aug. 2005.
- L. Yun Wei and K. Ching-Nan, "An Accurate Power Control Strategy for Power-Electronics-Interfaced Distributed Generation Units Operating in a Low-Voltage Multibus Micronetwork," Power Electronics, IEEE Transactions on, vol. 24, pp. 2977-2988, 2009.
- M. A. Aghasafari, L. A. C. Lopes, and S. Williamson, "Frequency regulation and enhanced power sharing in micronetworks including modified droop coefficients and virtual resistances" presented at Electrical Power & Energy Conference (EPEC), 2009 IEEE, 2009.

The present invention proposes a new concept of controller of the electrical characteristic to solve the aforementioned inconveniences.

**Description of the invention**

The virtual admittance controller based on static power converters being claimed is a new concept in the control of latest generation renewable power plants that allows offering advanced functionalities to improve the integration of said plants to the electric network.

This controller comprises an electrical power loop that enables the adjustment of parameters online with the purpose of improving the operation of a power generator under operating conditions. A virtual admittance is implemented in said loop, unlike in conventional controllers of the electrical characteristic, wherein an impedance is implemented.

At the inlet of the control loop, the existing difference in voltage between a virtual internal voltage and the voltage existing at the network connection point of the power converter is injected. This difference in voltage supplies a virtual admittance, which is in charge of determining the current to be injected to the network by the inverter.

Its principle of operation, as indicated above, is based on the inversed physical concept applied in conventional techniques. Equation (2) shows the expression that allows implementing virtual admittance at the outlet of the power converter connected to the network.

$$i = Y \cdot \left( e - v \right) \quad ; \quad Y = \frac{1}{R + sL} \qquad (2)$$

This expression shows that the current reference to be injected to the network results from multiplying the virtual admittance by the difference between the virtual reference voltage e and the voltage at the coupling point to the network v. In this case, the power controller based on the virtual admittance controller acts as a controlled current source. Therefore, unlike conventional techniques implementing a voltage source, in the controller of the present invention, the power converter connected to the network is regulated by means of a current control loop.

The electrical characteristic of the virtual admittance controller described by equation (2) presents, in a natural manner, a low pass filter characteristic, which implies that the virtual admittance controller offers a more robust and stable behavior in the presence of highfrequency harmonics than other conventional control techniques.

Likewise, the virtual admittance controller object of this invention allows the automatic adaptation of the electrical control loop parameters to optimize the response of the electronic power converter by establishing different virtual admittance values for each frequency range, and in the case of tri-phase systems, a virtual admittance for each direct, inverse, and homopolar sequence. This way, an elevated current is injected to the fundamental frequency of the network (nominal operating frequency), and the current minimizing the perturbation is injected to the other frequencies, harmonics, transient frequencies... This characteristic of the present invention entails significant progress with respect to other conventional techniques, which work with the use of a single impedance value.

In order to know the state of the network at any given moment, the controller measures the voltages and currents at the coupling point, given that these variables reflect the flow of current harmonics through the lines.

The virtual admittance value for each frequency range can be modified according to the requirements established by the network operator at any given moment. In the majority of the cases, these admittances have a resistive or inductive characteristic. It should be noted that, even in the case when a resistive value is established, this virtual admittance would not lead to a reduction in the efficiency of the electronic generator, given that these energy losses are virtual as well.

In summary, the virtual admittance controller of the present invention works with current references, instead of with voltage references (synchronous generators use voltage references and, in consequence, the conventional virtual synchronous controllers attempting to emulate the same also do so) and with a virtual admittance instead of working with a virtual impedance (in synchronous generators, the voltage-current ratio is through an impedance, and therefore, the conventional controllers emulating the same also base their operation on the concept of a virtual impedance).

Brief description of the drawings

With the purpose of facilitating the comprehension of the present invention, several figures have been attached representing the following in an illustrative rather than limitative manner:

- Figure 1 shows a simplified schematic representation of an electrical circuit of a synchronous generator (1a), together with the implementation of the virtual impedance used in conventional techniques (1b), and the implementation (1c) of a virtual admittance used in the virtual admittance controller object of this invention;
- Figure 2 shows a simplified representation of a electronic power generator implementing multiple virtual admittances in the electrical control loop of the virtual admittance controller;
- Figure 3 shows a diagram of the virtual admittance electronic controller of the present invention.

**Detailed description of a preferred embodiment**

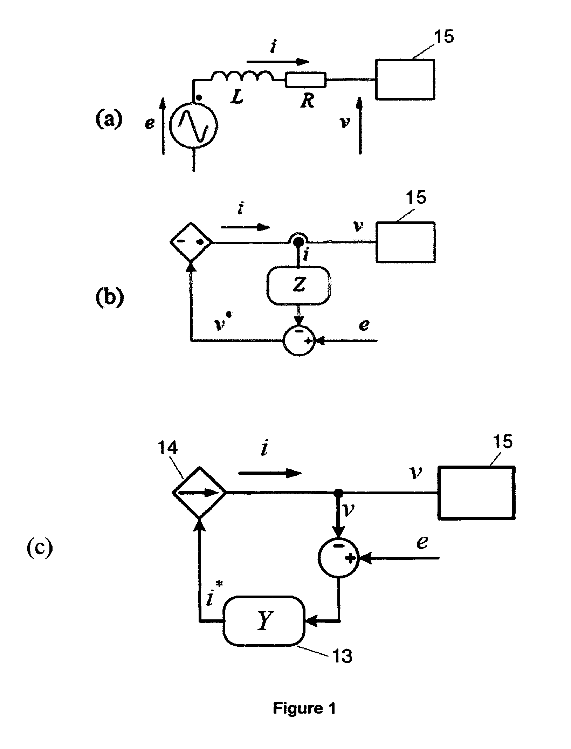

Next, a preferred embodiment of a virtual admittance controller based on the represented figures shall be explained below. As shown in figure 1(c), the virtual admittance controller comprises a control loop into the inlet of which is injected the difference in voltage between a virtual internal voltage (e) and the voltage at the network connection point (v). Said difference in voltages feeds a virtual admittance processor (13) that determines the value of a reference current (i*) that it communicates to a current source (14), said current source physically injecting said current into the network (15).

The values of the virtual admittance parameters (Y) are dynamically adapted to the conditions of the power network.

Figure 1(a) and 1(b) refer to the state of the art. Figure 1(a) represents a simplified electrical circuit of a conventional synchronous generator. Figure 1(b) represents the conventional implementation of virtual impedance in conventional control techniques of electrical power generators.

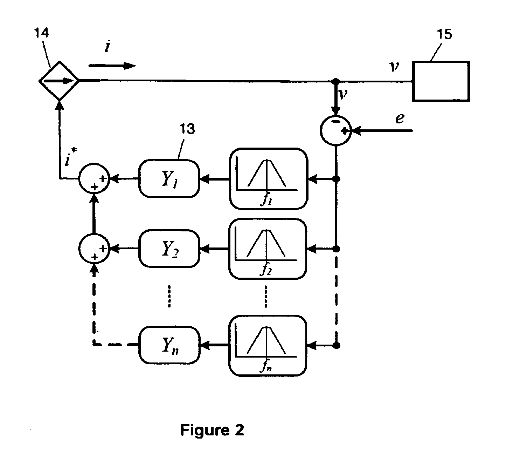

As shown in figure 2, the virtual admittance controller presents different behaviors for the different frequency ranges of the inlet, that is to say, the different frequency ranges ($f_1$, $f_2$..., $f_n$) of the difference between the virtual internal voltage (e) and the voltage of the connecting point with the network (v). This way, the controller of the invention offers a different admittance ($Y_1$, $Y_2$..., $Y_n$) for each frequency ($f_1$, $f_2$..., $f_n$) and sequence, such that an elevated current is injected to the fundamental frequency of the network and the current minimizing the perturbation is injected to the other frequencies, harmonic, transient, and imbalance frequencies. Therefore, the virtual admittance controller of the present invention behaves as multiple power generators working simultaneously.

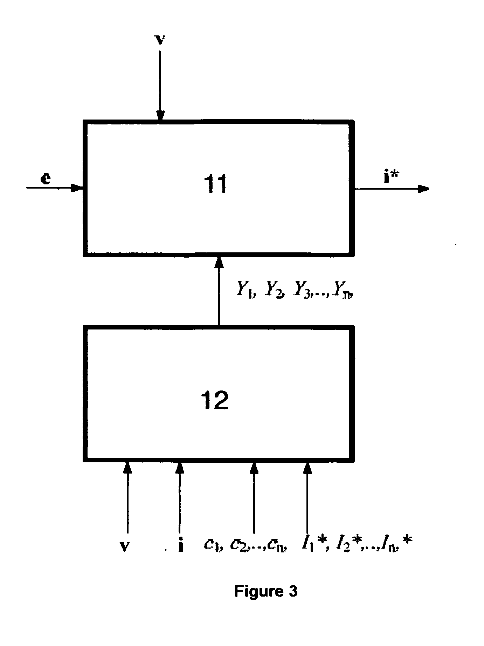

Figure 3 shows a diagram of the virtual admittance electrical controller of the present invention, which in turn comprises two blocks: the controller of the virtual electrical characteristic (11) and the adaptive virtual admittance value controller (12).

The adaptive virtual admittance controller (12), by means of the input voltage (v) and network current (i) variables (and/or any internal element of the power converter), of the adjustment parameters for each frequency range ($c_1$, $c_2$, ..., $c_n$) and the reference current values for each frequency and sequence ($I_1^*$, $I_2^*$,..., $I_n^*$), obtains the admittance value to be applied to each frequency and sequence ($Y_1$, $Y_2$,... $Y_n$).

The controller of the virtual electrical characteristic (11) is fed with the values of the virtual internal voltage (e), the voltage in the connection point to the network (v) and the virtual admittance ($Y_1$, $Y_2$,... $Y_n$) for that frequency and sequences (obtained from the adaptive virtual admittance controller (12). With all of this, the value of the reference current (i*) to be supplied to the current source (14) to be physically injected to the network (15), is obtained at the outlet.

The more direct application of the virtual admittance controller of static power converters presented in this invention is in renewable energy plants (especially photovoltaic and wind), but its use in any other application requiring similar characteristics is not ruled out.

**Claims**

1.  Virtual admittance controller based on static power converters connected to the network, **characterized in that** it comprises a control loop into the inlet of which is injected the difference in voltage between a virtual internal voltage (e) and the voltage at the network connection point (v). Said difference in voltages feeds a virtual admittance processor (13) that determines the value of a reference current (i*) that it communicates to a current source (14), said current source physically injecting said current into the network (15), the formula defining said current being the following:

$$i = Y \cdot (e - v)$$

2. Virtual admittance controller according to claim 1, **characterized in that** it comprises an adaptive virtual admittance controller (12), configured to

- receive as input signals the voltage (v) and current (i) of the network and/or any other internal element of the power converter, as well as a series of adjustment parameters $(c_1, c_2, ..., c_n)$ and reference current values ($I_1^*$, $I_2^*$,..., $I_n^*$) for each frequency and sequence range, and with all of it
- generate the admittance value $(Y_1, Y_2,... Y_n)$ to be applied to each frequency and sequence.

3. Virtual admittance controller according to claim 2, **characterized in that** the virtual admittance parameters (Y) are dynamically adapted to the conditions of the power network and to other contour conditions, presenting different behaviors for the different input frequency ranges $(f_1, f_2... f_n)$ and for the different input sequences, direct, inverse or homopolar, offering a different admittance $(Y_1, Y_2..., Y_n)$ for each frequency $(f_1, f_2..., f_n)$ and sequence, such that elevated currents can be injected to the fundamental frequency of the network and to the direct sequence and the current minimizing the possible existing perturbation is naturally injected to the other harmonic sequences and frequencies, as well as to transients and imbalances.

Figure 1

Figure 2

v

e →

## 11

i* →

$Y_1, Y_2, Y_3,.., Y_n,$

## 12

v          i          $c_1, c_2,..,c_n,$     $I_1^*, I_2^*,..,I_n^*$

**Figure 3**

# INTERNATIONAL SEARCH REPORT

| | International application No. |
|---|---|
| | PCT/ES2012/000048 |

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
H02P, G05F, H02M

Documentation searched other than minimum documentation to the extent that such documents are included in the fields searched

Electronic data base consulted during the international search (name of data base and, where practicable, search terms used)

EPODOC, INVENES, WPI, XPI3E, NPL, XPESP

**C. DOCUMENTS CONSIDERED TO BE RELEVANT**

| Category* | Citation of document, with indication, where appropriate, of the relevant passages | Relevant to claim No. |
|---|---|---|
| A | 28.06.2010, PHILIP T KREIN; TRISHAN ESRAM. Admittance control for anti-islanding protection in modular grid-connected inverters . Control and Modeling for Power Electronics (COMPEL), 2010 IEEE 12th Workshop on. 28.06.2010. Pag. 1-5. ISBN 978-1-4244-7462-2 ; ISBN 1-4244-7462-0 | 1-3 |
| A | 17.06.2007, CHIEN-LIANG CHEN; SUNG-YEUL PARK; JIH-SHENG LAI; SEUNGRYUL MOON. Admittance Compensation in Current Loop Control for a Grid-Tie LCL Fuel Cell Inverter. Power Electronics Specialists Conference, 2007. PESC 2007. IEEE, 17.06.2007. PG 520 – 526.ISBN 978-1-4244-0654-8 ; ISBN 1-4244-0654-4. | 1-3 |

☒ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 31/05/2012 | **(26/06/2012)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> L. García Aparicio <br><br> Telephone No. 91 3493057 |

Form PCT/ISA/210 (second sheet) (July 2009)

## INTERNATIONAL SEARCH REPORT

International application No.

PCT/ES2012/000048

C (continuation). DOCUMENTS CONSIDERED TO BE RELEVANT

| Category * | Citation of documents, with indication, where appropriate, of the relevant passages | Relevant to claim No. |
|---|---|---|
| A | 01.08.2005, CASTILLA M; GARCIADEVICUNA L; GUERRERO J M; MATAS J; MIRET J. Output Impedance Design of Parallel-Connected UPS Inverters With Wireless Load-Sharing Control. IEEE TRANSACTIONS ON INDUSTRIAL ELECTRONICS, 01.08.2005. VOL 52. Pg 1126-1135. ISSN 0278-0046 | 1-3 |
| A | 1.12.2010, JOSÉ CR MATAS; MIGUEL CASTILLA; LUIS GARCÍA DE VICUÑA; JAUME MIRET; JUAN CARLOS VASQUEZ. Virtual Impedance Loop for Droop-Controlled Single-Phase Parallel Inverters Using a Second-Order General-Integrator Scheme. IEEE TRANSACTIONS ON POWER ELECTRONICS, 01.12.2010. Vol 45. PG 2993-3002. ISSN 0885-8993 | 1-3 |

Form PCT/ISA/210 (continuation of second sheet) (July 2009)

| INTERNATIONAL SEARCH REPORT | International application No. |
|---|---|
| | PCT/ES2012/000048 |

**CLASSIFICATION OF SUBJECT MATTER**

*H02P9/02* (2006.01)
*G05F1/66* (2006.01)
*H02M7/48* (2007.01)
*H02P23/14* (2006.01)

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YAO, W. ; CHEN, M. ; MATAS, J. ; GUERRERO, J. M. ; QIAN, Z.-M.** Design and Analysis of the Droop Control Method for Parallel Inverters Considering the Impact of the Complex Impedance on the Power Sharing. *Industrial Electronics, IEEE Transactions,* February 2011, vol. 58 (2), 576-588
- **GUERRERO J. M. et al.** Output Impedance Design of Parallel-Connected UPS Inverters With Wireless Load-Sharing Control. *Industrial Electronics, IEEE Transactions,* August 2005, vol. 52 (4), 1126-1135
- **L. YUN WEI ; K. CHING-NAN.** An Accurate Power Control Strategy for Power-Electronics-Interfaced Distributed Generation Units Operating in a Low-Voltage Multibus Micronetwork. *Power Electronics, IEEE Transactions,* 2009, vol. 24, 2977-2988
- Frequency regulation and enhanced power sharing in micronetworks including modified droop coefficients and virtual resistances. **M. A. AGHASAFARI ; L. A. C. LOPES ; S. WILLIAMSON.** Electrical Power & Energy Conference. IEEE, 2009